# EUROPEAN PATENT SPECIFICATION

(11) **EP 4 214 282 B1**
(45) Date of publication and mention of the grant of the patent: **09.07.2025**
(21) Application number: 21789928.5
(22) Date of filing: 14.09.2021
(51) Int. Cl.: C09D 5/00

(54) **REACTIVE COLD-APPLIED THERMOPLASTIC BOND COAT**
REAKTIVE KALT AUFGETRAGENE THERMOPLASTISCHE HAFTBESCHICHTUNG
REVÊTEMENT DE LIAISON THERMOPLASTIQUE RÉACTIVE APPLIQUÉE À FROID

(30) Priority: 18.09.2020 US 202063080175 P
(43) Date of publication of application: 26.07.2023
(73) Proprietor: GCP Applied Technologies Inc., Malvern, PA 19355 (US)
(72) Inventor: KAZMI, Abbas, Manchester M18 7NJ (GB); HORTON, Steven, Manchester M28 7GG (GB); MCGUIRE, Katie, Manchester M34 5LW (GB); MILLNER, Jonathon, New Mills High Peak SK22 4BS (GB)
(74) Representative: J A Kemp LLP
(86) International application number: PCT/US2021/050145
(87) International publication number: WO 2022/060679

(56) References cited:
- EP-A1- 3 418 427
- EP-A2- 0 187 725
- WO-A2-2006/138053
- JP-A- 2018 034 437

## Description

### Field of the Invention

The invention relates to the field of bond coats, and more particularly to thermoplastic bond coats that are cold-applied and reactive, especially in bridge deck waterproofing applications.

### Background of the Invention

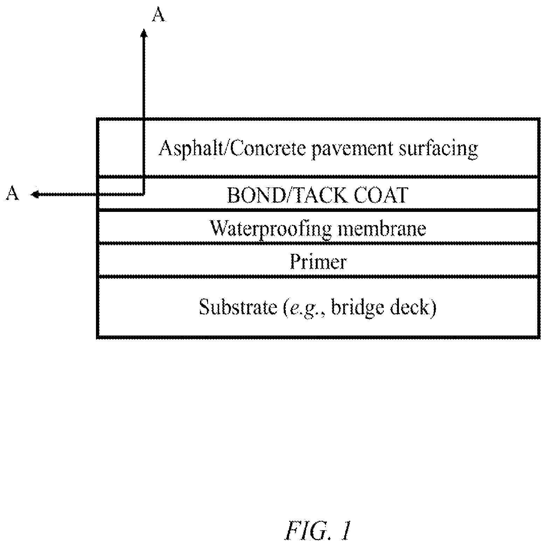

Bond coats are known and can be an essential component of a waterproofing system. See FIG. 1. Their primary purpose is to provide adhesion and to aid in compaction of the asphalt/concrete pavement to the waterproofing membrane. Types of bond coats include bitumen based hot melts, solvent-based acrylic bond coats, bitumen emulsions, and cold-applied reactive bond coats. A key property of any bond coat is to display thermoplastic properties; bond coats must melt when heat activated (by application of asphalt onto them at ~100-180°C) to form a strong adhesive bond with the pavement material. Conventional cold applied reactive materials do not melt if heated to typical asphalt application temperatures (or higher).

Hot melt bitumen based materials. These types of bond coats are primarily comprised of bitumen or polymer-modified bitumen (PMB), which is supplied in solid form at room temperature. On site, the bitumen is melted at high temperatures (~120-190°C) using boilers, and the molten material is then applied onto the waterproofing membrane. This is an undesired process due to the high energy requirements on site, risks associated with manually handling molten liquids, and potentially toxic fumes emitted during application. In addition, such bitumen-based materials often display poor adhesion to typical membranes - especially polyurethane and polyurea - and such membranes must be fully over-scattered with aggregate to provide a key between membrane and bitumen bond coat to enable suitable adhesion. Furthermore, PMBs have been observed to de-bond from membranes at high ambient temperatures, resulting in "pick-up" on the wheels, tracks, or tires of the paver/delivery vehicles. Importantly, when testing for adhesion between membrane and asphalt at high temperatures (>30°C), it is found that the bitumen softens, resulting in poor adhesion values.

Solvent-based acrylic bond coats. Solvent-based acrylic bond coats generally are only suitable for use with bitumen-rich, low voids content asphalts, e.g., mastic asphalt or sand carpet. Such bond coats typically contain a high concentration (>50%) of hazardous solvents, which flash off when applied onto the waterproofing membrane, leaving behind a thin film of dry thermoplastic material. The restriction of low wet (and hence dry) coat-weight results in poor all-round performance with many asphalt mix designs, especially those having low bitumen and higher voids content. Further problems can arise if any solvent remains trapped in the coating, which can lead to softening of the asphalt and blistering.

Bitumen emulsions. Bitumen emulsions are stabilized dispersions of bitumen in water allowing application at ambient temperature (although many are still heated to ~80°C). Application is restricted by ambient temperatures (5°C and rising). Long dry times are observed, especially at low ambient temperatures and high humidity (> 70%). Generally, only low coat weights of dry material are possible (< 0.3kg/m²). The restriction of low dry coat-weight results in poor all-round performance with many asphalt mix designs, especially those with low bitumen and higher voids content.

Cold-applied reactive bond coats. As the name suggests, these materials can be applied at ambient temperatures, eliminating the issues described above associated with having to heat and apply molten materials. Cold-applied reactive bond coats comprise solvent-free liquid resins that are catalyzed immediately prior to application and cure in-situ to form solid coatings. To date, the inventors are aware of only one such product that has been commercialized, *i.e.,* under the brand name BOND COAT 3 sold by the current applicant GCP APPLIED TECHNOLOGIES INC. However, improved adhesion properties and superior thermoplastic properties are desired. Despite excellent performance with some asphalts, a more robust solution is required to provide better bond coat performance on a wider range of asphalt mix designs.

Accordingly, what are needed are superior reactive cold-applied thermoplastic materials that can be used across a wide range of pavement types (*e.g.,* asphalt mix designs), providing strong adhesion and aiding in compaction of the pavement to the waterproofing membrane. Indeed, the importance of sufficient bond strength and avoidance of interconnecting voids at the interface is emphasized in the Highways England Design Manual for Roads and Bridges (Document CD358, Sections 6.4, 8.8, 8.8.1). However, in view of the art considered as a whole at the time the present invention was made, it was not obvious to those of ordinary skill in the field of this invention how the shortcomings of the prior art could be overcome.
JP 2018 034437 A describes a method for producing a composite body which has a coated metallic material containing a metallic material and an organic resin layer which is arranged on the metallic material and has a thickness of 0.2 µm or more, and a molded body of a thermoplastic resin composition joined to the coated metallic material.
WO 2006/138053 A2 describes a building materials composite having a first perforated coated scrim, a second perforated coated scrim, and a breathable thermoplastic film bonded to and sandwiched between the first and the second perforated coated scrims.
EP 0 187 725 A2 describes a coated fabric which comprises a base ply of a fiber material such as a non-woven fiber material, for example, a polypropylene non-woven material, having a thermoplastic film, for example, an ethylene methyl acrylate film, bonded thereto.
EP 3 418 427 A1 describes a chemical conversion coated metal sheet for non-condensed thermoplastic resin bonding, the chemical conversion coated metal sheet including a metal substrate and a chemical conversion coating film disposed on at least one surface of the metal substrate, in which the chemical conversion coating film is obtained by coating the metal substrate with a coating liquid that contains an ethylene-acrylic acid copolymer, colloidal silica, and a silane coupling agent. The ethylene-acrylic acid copolymer has an acrylic acid content of 10 mass% or more and a melt flow rate of 80g/10min or less.

While certain aspects of conventional technologies have been discussed to facilitate disclosure of the invention, Applicants in no way disclaim these technical aspects, and it is contemplated that the claimed invention may encompass one or more of the conventional technical aspects discussed herein.

The present invention may address one or more of the problems and deficiencies of the prior art discussed above. However, it is contemplated that the invention may prove useful in addressing other problems and deficiencies in a number of technical areas. Therefore, the claimed invention should not necessarily be construed as limited to addressing any of the particular problems or deficiencies discussed herein.

### Summary of the Invention

The long-standing but heretofore unfulfilled need for improved compositions and methodologies for a cold-applied, truly thermoplastic bond coat is now met by a new, useful, and nonobvious invention.

Exemplary embodiments of the current invention are compositions and methods for a 100% solids reactive, cold-applied bond coat that exhibits truly thermoplastic properties after curing. The present invention provides in particular: a reactive cold-applied thermoplastic bond coat system, comprising:
a first component comprising:
a polyacrylate polymer in an amount of about 10-30% by weight of the composition, wherein the polyacrylate polymer is a polymethacrylate polymer, a poly(methyl methacrylate) polymer, homopolymers thereof, copolymers thereof, or combinations thereof;
acrylate monomers in an amount of about 5-45% by weight of the composition,
a tackifier in an amount of about 10-50% by weight of the composition, wherein the tackifier is selected from the group consisting of a terpene phenolic compound, a styrenated terpene, a rosin ester compound, an alpha methyl styrene phenolic compound, a polyterpene, and combinations thereof;
a plasticizer in an amount of about 0.1-10% by weight of the composition, wherein the plasticizer is selected from the group consisting of an adipate compound, dibutyl sebacate, dibutyl maleate, diisobutyl maleate, an orthophthalate, a terephthalate, a dicarboxylic ester phthalate, a tricarboxylic ester phthalate, a trimellitate, a benzoate, 1,2-cyclohexane dicarboxylic acid diisononyl ester (DINCH), an organophosphate, a glycol, a polyether, and a bio-based plasticizer; and
an accelerator in an amount of about 0-5% by weight of the composition; where the accelerator is at least one selected from the group consisting of dimethyl aniline, dimethyl para toluidine, methyl hydroxyethyl para toluidine, and di-isopropyl toluidine; and
a second component comprising an initiator suspension, such as a peroxide initiator suspension, in an amount of about 0-10% by weight of the composition,
wherein a mixture of the first component and the second component is sprayable or manually appliable and cures to form a solid bond coat. In certain embodiments, the bond coat cures in a short time to form a solid coating, which in turn melts upon exposure to temperatures exceeding its melting point. Molten bond coats facilitate asphalt compaction at the membrane interface, which in turn increases surface contact area between asphalt and membrane. It also allows aggregate from the asphalt to penetrate into the bond coat layer. Greater surface contact area means greater bonded surface area, resulting in higher tensile and shear adhesion values. Greater surface contact area corresponds to less voids at the membrane interface, restricting the areas where water can penetrate to the interface via interconnecting voids.

These and other important objects, advantages, and features of the invention will become clear as this disclosure proceeds.

The invention accordingly comprises the features of construction, combination of elements, and arrangement of parts that will be exemplified in the disclosure set forth hereinafter and the scope of the invention will be indicated in the claims.

### Brief Description of the Drawings

For a fuller understanding of the invention, reference should be made to the following detailed description, taken in connection with the accompanying drawing, in which:
FIG. 1 is a cross-sectional schematic of a bridge deck waterproofing construction, including a substrate, primer, waterproofing membrane(s), bond coat, and pavement surfacing. This schematic is not drawn to scale *(e.g.,* the waterproofing membrane is typically far thicker than the primer).

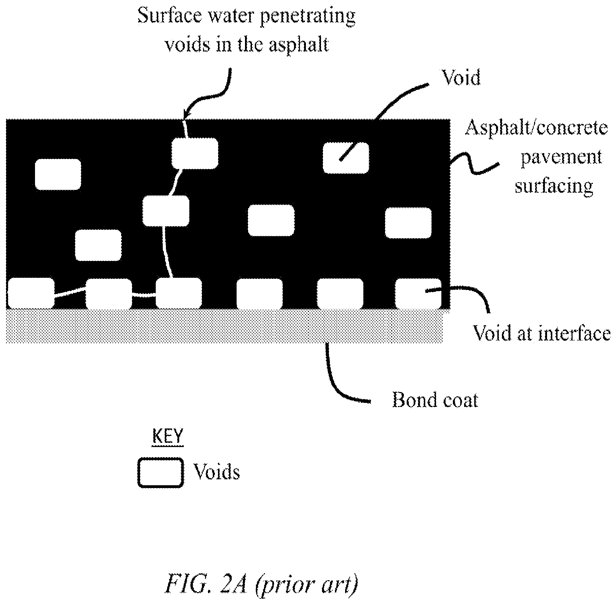

FIG. 2A is a cross-sectional schematic of pavement surfacing (e.g., asphalt) applied on a conventional (non-PMB based) bond coat, where low compaction can be observed at the interface between the bond coat and the pavement surfacing. The voids at the interface lead to low contact area between the asphalt and the bond coat. Water can penetrate and collect in voids in the asphalt. If the voids at the interface are interconnecting, hydrostatic pressure can lead to premature pavement failure.

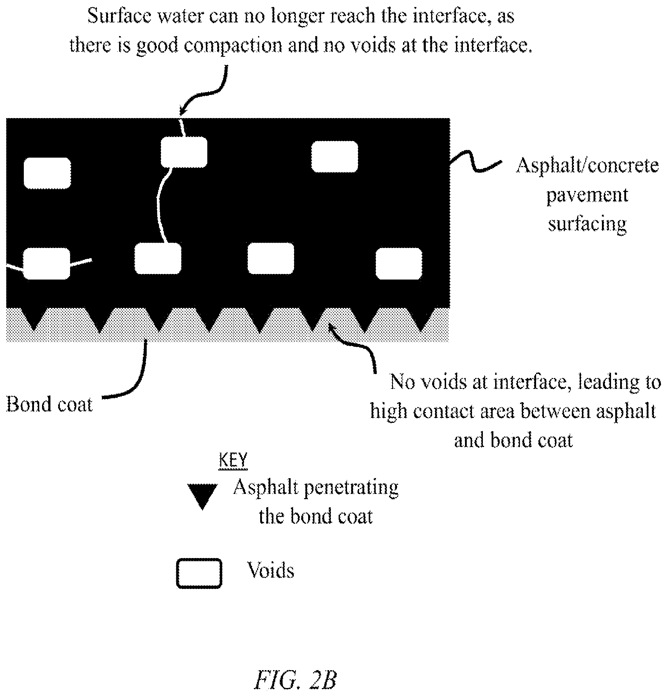

FIG. 2B is a cross-sectional schematic of pavement surfacing (e.g., asphalt) applied on a bond coat, according to certain embodiments of the current invention, where high compaction and no voids can be observed at the interface between the bond coat and the pavement surfacing. Furthermore, it can be seen that the asphalt penetrates the molten bond coat which is displaced to further fill voids at the interface.

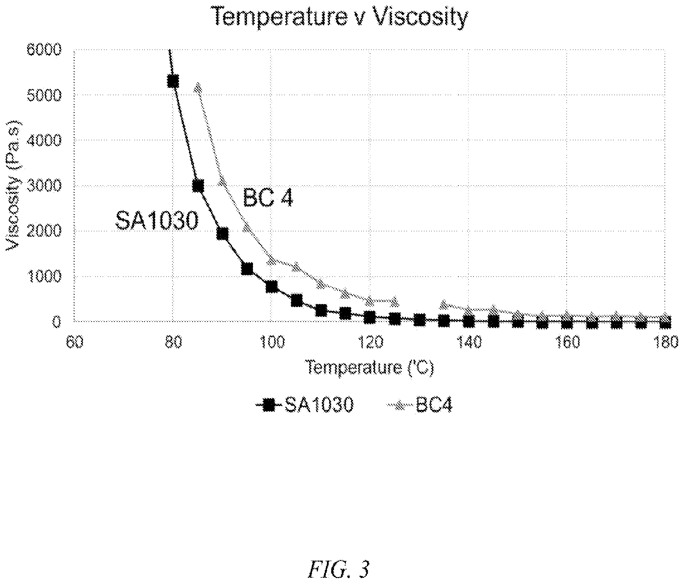

FIG. 3 is a graphical illustration comparing viscosity (at various temperatures) of a polymer-modified bitumen-based thermoplastic bond coat (SA1030) and an embodiment of the current reactive thermoplastic bond coat (BC4). The viscosity is measured by placing material on a heated metal base (e.g., Peltier plate), and a parallel plate is moved down onto the material (1000-µm gap between base and plate). The device measures the viscosity of the material by rotating the parallel plate at a particular shear rate (1 rotation/second) and measuring the resistance.

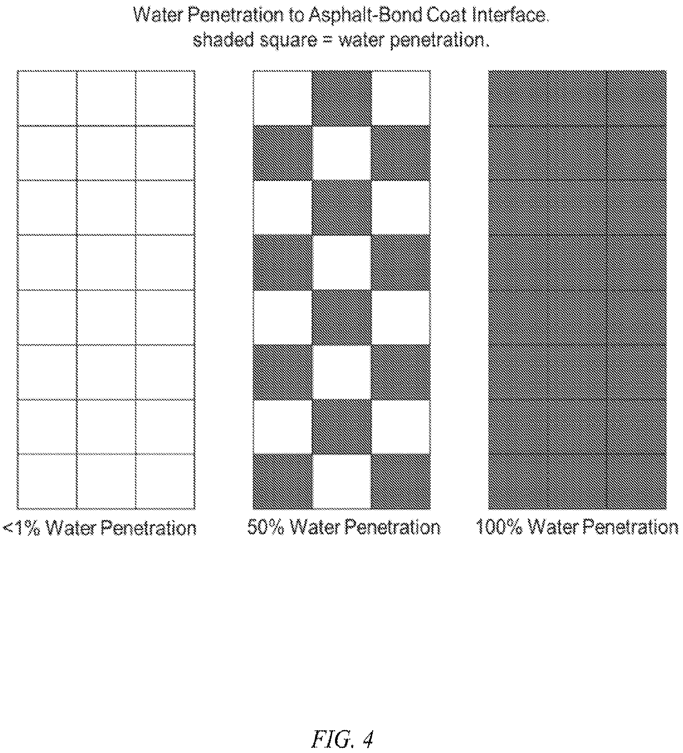

FIG. 4 is a series of schematics illustrating percent water penetration through asphalt compacted over a bond coat, at the following levels: less than about 1% water penetration, about 50% water penetration, and about 100%. Water penetration and surface contact area between the asphalt and bond coat have an indirect relationship, such that higher surface contact area leads to lower water penetration.

### Detailed Description of Exemplary Embodiments

In the following detailed description of the preferred embodiments, reference is made to the accompanying drawings, which form a part thereof, and within which are shown by way of illustration specific embodiments by which the invention may be practiced. It is to be understood that other embodiments may be utilized, and structural changes may be made without departing from the scope of the invention.

As used in this specification and the appended claims, the singular forms "a", "an", and "the" include plural referents unless the content clearly dictates otherwise. As used in this specification and the appended claims, the term "or" is generally employed in its sense including "and/or" unless the context clearly dictates otherwise.

As used herein, "about" means approximately or nearly and in the context of a numerical value or range set forth means ±15% of the numerical. In exemplary embodiments, the term "about" can include traditional rounding according to significant figures of the numerical value. In addition, the phrase "about 'x' to 'y‴ includes "about 'x' to about 'y‴.

Further, any range of numbers recited in the specification or claims, such as that representing a particular set of properties, units of measure, conditions, physical states or percentages, is intended to literally incorporate expressly herein by reference or otherwise, any number falling within such range, including any subset of numbers within any range so recited. For example, whenever a numerical range with a lower limit, RL, and an upper limit RU, is disclosed, any number R falling within the range is specifically disclosed. In particular, the following numbers R within the range are specifically disclosed: *R = RL + k*(*RU* - *RL*), where k is a variable ranging from 1% to 100% with a 1% increment, e.g., k is 1%, 2%, 3%, 4%, 5%.... 50%, 51%, 52% ...95%, 96%, 97%, 98%, 99%, or 100%. Moreover, any numerical range represented by any two values of R, as calculated above, is also specifically disclosed.

In a first example embodiment, the current invention is a reactive cold-applied thermoplastic bond coat system, comprising:
a first component comprising:
a polyacrylate polymer in an amount of about 10-30% by weight of the composition, wherein the polyacrylate polymer is a polymethacrylate polymer, a poly(methyl methacrylate) polymer, homopolymers thereof, copolymers thereof, or combinations thereof;
acrylate monomers in an amount of about 5-45% by weight of the composition;
a tackifier in an amount of about 10-50% by weight of the composition, wherein the tackifier is selected from the group consisting of a terpene phenolic compound, a styrenated terpene, a rosin ester compound, an alpha methyl styrene phenolic compound, a polyterpene, and combinations thereof;
a plasticizer in an amount of about 0.1-10% by weight of the composition, wherein the plasticizer is selected from the group consisting of an adipate compound, dibutyl sebacate, dibutyl maleate, diisobutyl maleate, an orthophthalate, a terephthalate, a dicarboxylic ester phthalate, a tricarboxylic ester phthalate, a trimellitate, a benzoate, 1,2-cyclohexane dicarboxylic acid diisononyl ester (DINCH), an organophosphate, a glycol, a polyether, and a bio-based plasticizer; and
an accelerator in an amount of about 0-5% by weight of the composition; where the accelerator is at least one selected from the group consisting of dimethyl aniline, dimethyl para toluidine, methyl hydroxyethyl para toluidine, and di-isopropyl toluidine;
a second component comprising an initiator suspension, such as a peroxide initiator suspension, in an amount of about 0-10% by weight of the composition; and
optionally a third component comprising:
   a polyacrylate (e.g., PMMA) polymer, preferably in an amount of about 10-30% by weight of the composition;
   acrylate monomers, preferably in an amount of about 5-45% by weight of the composition;
   a tackifier, preferably in an amount of about 10-50% by weight of the composition; and
   a plasticizer, preferably in an amount of about 0.1-10% by weight of the composition;
wherein a mixture of the first component, the second component, and the optional third component is sprayable and cures to form a solid coating.

In a second example embodiment, which may be based on the first example embodiment above, the first component further comprises at least one additive, preferably in an amount of about 0-50% by weight of the composition. In an aspect of this second example embodiment, the at least one additive may be selected from fillers, inhibitors, pigments, anti-settlement aids, rheology modifiers, photoinitiators, UV stabilizers, degassers, antistatic agents, accelerants, catalysts, stabilizers, fire retardants, pH adjusters, reinforcing agents, thickening or thinning agents, elastic compounds, chain transfer agents, radiation absorbing compounds, radiation reflecting compounds, and combinations thereof.

In a third example embodiment, which may be based on any of the first through second example embodiments above, the second component is mixed with the third component (in scenarios when the third component is included) to form an activated third component, where a mixture of the first component and this activated third component is sprayable and cures to form the bond coating. In an aspect of this this third example embodiment, the third component further comprises at least one additive, preferably in an amount of about 0-50% by weight of the composition. Optionally, the at least one additive is selected from fillers, inhibitors, pigments, anti-settlement aids, rheology modifiers, photoinitiators, UV stabilizers, degassers, antistatic agents, accelerants, catalysts, stabilizers, fire retardants, pH adjusters, reinforcing agents, thickening or thinning agents, elastic compounds, chain transfer agents, radiation absorbing compounds, radiation reflecting compounds, and combinations thereof.

In a fourth example embodiment, which may be based on any of the first through third example embodiments above, the bond coat-after curing and upon exposure to a temperature of about 200°C or below-becomes a molten liquid having a viscosity effective to assist in compaction of a pavement material applied on the bond coat, such that a water penetration at the interface of the bond coat and the pavement material is about 50% or less, preferably about 1% or less. In an aspect of this fourth example embodiment, the exposure temperature is about 100°C or less and the viscosity is about 6000 cP or less.

In a fifth example embodiment, which may be based on any of the first through fourth example embodiments above, the bond coat results in a shear adhesion between a substrate (e.g., waterproofing membrane) on which the bond coat is applied and a pavement material applied on the bond coat between about 0.3 MPa and about 3.0 MPa at a temperature of about 23°C and a coat weight of about 600-1200 gsm.

In a sixth example embodiment, which may be based on any of the first through fifth example embodiments above, the bond coat results in a tensile adhesion between the substrate and the pavement material between about 0.3 MPa and about 1.3 MPa at a temperature of about 23°C and a coat weight of about 600-1200 gsm.

In a seventh embodiment, which may be based on any of the first through sixth embodiments, the current invention is a method of attaching a pavement material to a substrate, comprising:
mixing together a first component and a second component;
wherein the first component comprises:
   a polyacrylate polymer in an amount of about 10-30% by weight of the composition, wherein the polyacrylate polymer is a polymethacrylate polymer, a poly(methyl methacrylate) polymer, homopolymers thereof, copolymers thereof, or combinations thereof;
   acrylate monomers in an amount of about 5-45% by weight of the composition,
   a tackifier in an amount of about 10-50% by weight of the composition, wherein the tackifier is selected from the group consisting of a terpene phenolic compound, a styrenated terpene, a rosin ester, an alpha methyl styrene phenolic compound, a polyterpene, and combinations thereof;
   a plasticizer in an amount of about 0.1-10% by weight of the composition, wherein the plasticizer is selected from the group consisting of an adipate compound, dibutyl sebacate, dibutyl maleate, diisobutyl maleate, an orthophthalate, a terephthalate, a dicarboxylic ester phthalate, a tricarboxylic ester phthalate, a trimellitate, a benzoate, 1,2-cyclohexane dicarboxylic acid diisononyl ester (DINCH), an organophosphate, a glycol, a polyether, and a bio-based plasticizer; and
   an accelerator in an amount of about 0-5% by weight of the composition; wherein the accelerator is at least one selected from the group consisting of dimethyl aniline, dimethyl para toluidine, methyl hydroxyethyl para toluidine, and di-isopropyl toluidine,
   wherein the second component comprises an initiator suspension, such as a peroxide initiator suspension, in an amount of about 0-10% by weight of the composition;
   applying the mixture onto the substrate without the use of heating elements;
   allowing the mixture to cure to form a cured bond coat;
   applying the pavement material onto the cured bond coat to form a composite of the pavement material, the bond coat, and the membrane (substrate).

**In** an eighth embodiment, which may be based on any of the fifth through seventh embodiments, the pavement material is asphalt. **In** an aspect of this eighth embodiment, the asphalt may be selected from asphaltic concrete, hot rolled asphalt, stone mastic asphalt, mastic asphalt, porous asphalt, sand carpet, asphalt protection layer, or a combination thereof. In another aspect of this eighth embodiment, the asphalt may have an average aggregate size of up to about 55 mm.

In a ninth embodiment, which may be based on any of the seventh through eighth embodiments, the substrate is a waterproofing membrane.

In a tenth embodiment, which may be based on any of the seventh through ninth embodiments, the step of applying the mixture onto the substrate is performed by spraying the mixture onto the substrate.

In an eleventh embodiment, which may be based on any of the seventh through tenth embodiments, the mixture is applied onto the substrate at a coat weight of about 100 gsm to about 1400 gsm.

In a twelfth embodiment, which may be based on any of the first through eleventh embodiments, the method further comprises mixing a third component together with the second component to form an activated third component, which is subsequently mixed with the first component and applied onto the substrate.

In a thirteenth embodiment, which may be based on any of the fifth through twelfth embodiments, upon application of the pavement material onto the cured bond coat, the pavement material is capable of compacting on the bond coat, such that a water penetration at the interface of the bond coat and the pavement material is about 50% or less, preferably about 1% or less.

In a fourteenth example embodiment, which may be based on any of the seventh through thirteenth example embodiments above, the bond coat-after curing and upon exposure to a temperature of about 200°C or below-becomes a molten liquid having a viscosity effective to assist in compaction of a pavement material applied on the bond coat, such that a water penetration at the interface of the bond coat and the pavement material is about 50% or less, preferably about 1% or less. In an aspect of this fourteenth example embodiment, the exposure temperature is about 100°C or less and the viscosity is about 6000 cP or less.

In a fifteenth example embodiment, which may be based on any of the seventh through fourteenth example embodiments above, the bond coat results in a shear adhesion between the substrate and the pavement material between about 0.3 MPa and about 3.0 MPa at a temperature of about 23°C and a coat weight of about 600-1200 gsm.

In a sixteenth example embodiment, which may be based on any of the seventh through fifteenth example embodiments above, the bond coat results in a tensile adhesion between the substrate and the pavement material between about 0.3 MPa and about 1.3 MPa at a temperature of about 23°C and a coat weight of about 600-1200 gsm.

In a seventeenth example embodiment, the current invention is a reactive cold-applied thermoplastic bond coat system based on any one or more-or even allof the first through sixth example embodiments.

In an eighteenth example embodiment, the current invention is a method of attaching a pavement material to a substrate based on any one or more-or even allof the seventh through sixteenth example embodiments.

In certain exemplary embodiments, the present invention teaches a liquid composition that has superior thermoplastic properties and can be spray applied to various coat weights depending on the type of asphalt being employed. The resin has a wide application temperature range and can be cold applied using a standard 1: 1 ratio pump. Once applied, the system cures seamlessly providing strong adhesion to the waterproofing membrane. Upon application of hot asphalt, the cured bond coat melts becoming highly fluid, facilitating greater compaction of the asphalt at the membrane interface. This results in higher surface contact area between asphalt and membrane, along with reduced air voids at the interface. The system has a cure time within two (2) hours, and preferably one (1) hour, from -10 to 50°C, is a 100% solids reactive system, and has low volatile organic content (VOC). Tensile and shear adhesion values of asphalt to membrane were found to be surprisingly excellent, even when tested at high temperatures (50°C). In certain embodiments, the composition is particularly useful with waterproofing membranes and can be applied under normal conditions experienced on concrete and steel bridge decks.

Within the context of the present disclosure, the term "cold-applied" refers to the ability of a composition to be applied at ambient temperature without use of boilers for melting or heated lines prior to application. The use of boilers or other heating means is undesirable due to the high energy requirements on site, the risks associated with manual handling of molten liquids and the potentially toxic fumes emitted during application. In contrast, embodiments of the current bond coat composition can be applied at a range of ambient temperatures (e.g., about -10°C to about 50°C) without any requirement for heating.

Within the context of the present disclosure, the term "compaction" refers to the process of densifying a hot mix asphalt by reducing voids within the asphalt, thus promoting higher surface contact area between the pavement material and the waterproofing membrane. Good compaction is characterized by lower water penetration to the interface, due to the lack of interconnecting voids within the asphalt. Asphalt mixes are designed to have varying levels of voids following suitable compaction. This typically varies anywhere between about 1% (*e.g*., mastic asphalt) to about 20% *(e.g.,* porous asphalt). Compaction is typically accomplished by an external force (roller) being exerted on the asphalt mix. Good compaction is often most difficult to achieve at the base of the asphalt layer where it contacts the solid substrate below. The importance of minimizing/eliminating air voids at the interface is a welldocumented requirement for minimizing the risk of premature failure of asphalt pavements. Highways England Design Manual for Roads and Bridges (Document CD358) offers guidance on the type and thickness of asphalt to be used directly over the waterproofing membrane. CD358 states that the air void content in the asphalt layer directly above the waterproofing membrane should be below 4% so the amount of water entering the layer is low. It further states that the voids at the base of the asphalt layer shall be prevented from interconnecting - which can be achieved with use of a suitable bond coat. It is contemplated herein that embodiments of the current bond coat achieve better compaction at the interface compared to conventional bond coats (non-PMB based) due to the thermoplastic nature of the current composition. Fully molten bond coats facilitate markedly better compaction compared to conventional cold-applied reactive bond coats. Better compaction at the interface results in more surface contact area between the asphalt and bond coat, which in turn results in greater adhesion. Furthermore, the current bond coat allows the asphalt to penetrate into and embed in the bond coat, creating a strong mechanical bond. At the same time, the molten bond coat is displaced upwards to fill any remaining voids at the interface. See FIGS. 2A-2B for a comparison of low compaction (as seen in conventional non-PMB bond coats) versus high compaction (as seen in the current bond coat).

Within the context of the present disclosure, the term "thermoplastic" refers to a material property in which the material melts when heated to above its melt temperature and solidifies when cooled below its melt temperature. Thermoplastic materials are in contrast to thermoset materials, which are irreversibly solid after curing. Certain embodiments of the current invention are unique in that they are cold applied, liquid materials that cure to become a solid and behave thereafter as a truly thermoplastic material, *i.e.,* becoming molten when heated to above the melt temperature.

Conventionally, cured methyl methacrylate-based cold-applied reactive coatings do not melt when subjected to high temperatures. As such, it was surprising when embodiments of the current invention (an acrylate-based cold-applied reactive material) were found to have truly thermoplastic properties at higher temperatures. Without being bound by theory, it is hypothesized that this phenomenon is occurring due to the combination of a rosin ester and plasticizer being included within the composition and/or due to the plasticizer having lubricating properties at the molecular level, thus allowing a lower density polymer network and/or allowing the polymer network to unwind considerably and become a molten liquid at high temperatures.

Within the context of the present disclosure, the term "water penetration" refers to the ability of water to permeate across an asphalt mix at the asphalt-membrane interface via interconnecting voids. Water penetration at the interface is recorded herein as a percentage and may be determined by methods known in the art. Within the context of the present disclosure, measurements of water penetration at the interface are acquired according to the following methodology. A full composite sample (*i.e.,* about 1ft x 1ft) is prepared, including the following layers: concrete, primer, membrane, bond coat, and asphalt. Once the sample is prepared, a concrete saw with a water pump (containing suitably dyed water) is used to cut the sample into test sample sizes (*i.e.,* about 100 mm x 200 mm). The water is applied directly on the rotating saw where the cut is taking place. If there are any voids/non-contact areas between asphalt and membrane at the interface, the pressurized water will infiltrate such gaps and traverse the interface via interconnecting voids. After the asphalt layer is removed via a shear adhesion test (according to ETAG 033), the surface of the bond coat can be assessed to determine if water has penetrated through any voids at the asphalt membrane interface. This is a visual assessment in which the approximate surface area contaminated by dyed water at the interface is reported. This is exemplified in FIG. 4, where water penetration is categorized as about 100%, about 50%, or equal to or less than about 1%. Preferably, use of the bond coat according to the present disclosure in the composite system discussed herein results in a water penetration of about 90% or less, preferably about 50% or less, or even more preferably about 1% or less.

Thermoplastic bond coats allow more efficient compaction of the asphalt, minimizing voids at the interface. They can also flow into and fill such voids, further minimizing water ingress down to the membrane interface. In an embodiment, the current invention is a reactive cold-applied thermoplastic bond coat composition that comprises three components (A, B, C) that are mixed and spray applied on site, as follows:
(1) Component A
   a. polyacrylate polymer in an amount of about 10-30% by weight of the composition;
   b. Acrylate monomers in an amount of about 5-45% by weight of the composition;
   c. Tackifier in an amount of about 10-50% by weight of the composition;
   d. Plasticizer in an amount of about 0.1-10% by weight of the composition;
   e. Optionally at least one additive, preferably in an amount of about 0-50% by weight of the composition; and
   f. An accelerator in an amount of about 0-5% by weight of the composition.
(2) Component B
   a. An initiator suspension, such as a peroxide initiator suspension, preferably in an amount of about 0-10% by weight of the composition.
(3) Component C
   a. polyacrylate polymer, preferably in an amount of about 10-30% by weight of the composition;
   b. Acrylate monomers, preferably in an amount of about 5-45% by weight of the composition;
   c. Tackifier, preferably in an amount of about 10-50% by weight of the composition;
   d. Plasticizer, preferably in an amount of about 0.1-10% by weight of the composition; and
   e. Optionally at least one additive in an amount of about 0-50% by weight of the composition.

Within the context of the present disclosure, the term "polyacrylate" refers to a synthetic resin formed from the polymerization of acrylic esters, where the resin serves as the polymer backbone of the respective component. Polyacrylate-based plastics are generally characterized by their toughness and elasticity. Examples of polyacrylate polymers that are contemplated to be used herein include poly methacrylate polymers (*e.g*., poly(methyl methacrylate) (PMMA) or poly methyl-conbutyl methacrylate). It is contemplated herein that the polyacrylate polymers used herein may be synthesized from a variety of acrylates or methacrylates and can be homopolymers or copolymers thereof, and/or any combinations thereof. It is further noted that acrylate monomers are esters that contain vinyl groups directly attached to the carbonyl carbon of the ester group. Acrylate monomers have the structure H₂C=C(R¹)COOR².

Within the context of the present disclosure, the term "tackifier" refers to a material that helps enable the coating to melt when heated. It also helps increase the tensile adhesion and shear strength between two distinct materials, such as between a membrane and the pavement via a bond coat. Examples of tackifiers that are contemplated to be used herein include terpene phenolic, styrenated terpene, rosin ester, alpha methyl styrene phenolic, polyterpenes, or any combination thereof. The amount of tackifying resin utilized is about 10-50% by weight of the composition in which the tackifier is present, preferably about 30% by weight of the composition.

Within the context of the present disclosure, the term "plasticizer" refers to materials that can be added to the bond coat composition to enhance the thermoplastic behavior of the cured material, *i.e.,* allow it to become fully molten when heated above its melting point. Examples of plasticizers that are contemplated to be used herein include adipates, dibutyl sebacate, dibutyl maleate, diisobutyl maleate, orthophthalates, terephthalates, dicarboxylic ester phthalates, tricarboxylic ester phthalates, trimellitates, benzoates and others including 1,2-cyclohexane dicarboxylic acid diisononyl ester (DINCH), organophosphates, glycols, polyethers, and bio-based plasticizers. In a preferred embodiment, orthophthalate is used as the plasticizer. The amount of plasticizer utilized is about 0.1-10% by weight of the composition in which the plasticizer is present, preferably about 2.0-8.0% by weight of the composition, and even more preferably about 3% by weight of the composition.

Within the context of the present disclosure, the term "viscosity" refers to the measure of a fluid's resistance to deformation (flow) at a given shear rate. A liquid with a lower viscosity flows more freely/readily than a liquid with a higher viscosity. Viscosity is typically measured in units of centipoise (cP). The viscosity of a liquid, such as the bond coat composition, may be determined by methods known in the art. It should be noted that embodiments of the current invention can be liquid both before and after cure; both scenarios are defined below. The first scenario embodies the bond coat prior to cure, *i.e.,* before initiator has been added. At this stage, the product is a free-flowing solution of tackifier and other additives dissolved in low viscosity monomers, and free-radical polymerization has yet to be initiated. Addition of radical initiator (*e.g*., benzoyl peroxide) initiates a free-radical polymerization reaction which leads to the formation of a solid polymer network. The second scenario is when this cured solid material is heated to temperatures above its melting point where it becomes a flowable molten liquid. As can be understood, this second scenario demonstrates thermoplastic behavior as the material melts when heated to temperatures above its melt point; in contrast, thermoset materials do not melt regardless of elevated temperature. Within the context of the present disclosure, viscosity measurements are acquired for this second molten scenario using a cone and plate rheometer (TA INSTRUMENTS HR-1 DISCOVERY Hybrid Rheometer), with a 40-mm parallel plate, 1000-µm gap, and a Peltier plate to control temperature. The temperature is ramped down from 200°C to 80°C at a rate of 2°C/minute with 30 viscosity measurements being recorded per minute. The plate is rotated at a shear rate of 1 reciprocal second (1/s). Preferably, at a temperature of about 85°C or higher, the bond coat taught by the present disclosure has a viscosity of about 6000 cP or lower, 5800 cP or lower, 5600 cP or lower, 5400 cP or lower, 5200 cP or lower, 5000 cP or lower, 4800 cP or lower, 4600 cP or lower, or in a range between any two of these values.

It should be noted that certain embodiments of the current invention have a melting temperature at about 85°C, such that the cured bond coat becomes molten liquid and can interact with the pavement material (*e.g*., hot asphalt) applied thereon, allowing the pavement material to compact better on the bond coat at the membrane interface resulting in higher surface contact area and hence improved adhesion values. However, this melting point can be tuned according to the composition of the bond coat, such that it may be higher or lower as needed. Thus, the temperature 85°C is used here as a reference point for embodiments of the current invention. Furthermore, viscosity may also be adjusted based on the composition of the bond coat. A primary consideration is that the molten viscosity of the bond coat be sufficiently low to facilitate excellent compaction of the paving material, providing high surface contact area at the membrane interface resulting in low water penetration (preferably ≤ ~50% or even more preferably ≤ ~1%) at the interface. The second requirement is for the molten bond coat to fully wet out the paving material and make intimate contact allowing higher adhesion values.

Within the context of the present disclosure, the term "molten liquid" refers to the state of a bond coat having a viscosity sufficiently low to permit interaction with, allow penetration into, wet out and facilitate compaction of a pavement material (*e.g*., hot asphalt), such that upon solidifying to form a composite where the bond coat and pavement material are secured together, surface contact area at the interface is high, shown by low water penetration (preferably ≤ 50% or even more preferably ≤ 1%) at the interface. It can be appreciated that melting point and molten viscosity of the bond coat can vary based on the composition, while still being sufficiently low to permit interaction with, penetration by, and compaction of the pavement material. A sufficient viscosity may be dependent on the nature of the pavement material. For example, certain embodiments of the current invention were found to have a viscosity of about 6000 cP or less measured at 85°C. However, higher viscosities and melting points are contemplated, so long as the cured bond coat can form a molten liquid that interacts with the pavement material, resulting in higher surface contact area and low water penetration at the interface.

It should be noted that when asphalt is used as the pavement material applied onto the bond coat, the maximum temperature that the bond coat will be upon contact with hot asphalt is about 200°C, or more specifically about 190°C. It is thus contemplated that the bond coat should have a melting point below about 200°C, such that when exposed to such temperatures, the bond coat melts, having a suitable viscosity effective to facilitate compaction of a pavement material applied on the bond coat, such that surface contact area at the interface of the bond coat and the pavement material is about 50% or more (resulting in a water penetration of about 50% or less), more preferably about 99% or more (resulting in a water penetration of about 1% or less). In certain embodiments, this exposure temperature is about 100°C or less and the bond coat viscosity is about 6000 cP or less (though higher viscosity is contemplated).

Embodiments of the current bond coat can be seen to exhibit true thermoplastic properties compared to conventional reactive bond coats that do not melt. While conventional reactive bond coats can provide satisfactory performance with bitumen-rich and low-void mix designs, it does not provide suitable performance with asphalt mix designs having higher voids content (>4%), lower bitumen content (<5%) and/or containing larger aggregates (>14mm). In contrast, the current bond coat has a similar temperature versus viscosity profile to conventional PMB bitumen-based thermoplastic bond coats which are long proven to aid compaction and fill voids at the membrane interface (though the current bond coat does not have the drawbacks of conventional bitumen-based thermoplastic bond coats). See FIG. 3. As also seen in Table 1, the current bond coat is fluid across all temperatures tested, which supports the compaction process. Although the current bond coat is not as fluid as the bitumen-based hot melt thermoplastic bond coat, it is sufficiently fluid to provide excellent compaction, as proven by the lack of water getting to the bond coat-asphalt interface during testing of cured samples, which will be discussed further as this specification continues.

**Table 1. Viscosity comparisons of a conventional hot-melt thermoplastic bond coat, a conventional reactive bond coat, and an embodiment of the current reactive thermoplastic bond coat.**

| | **Bond Coat Viscosity (cP)** | | |
|---|---|---|---|
| **T (°C)** | *Conventional hot-melt thermoplastic bond coat* | *Conventional reactive bond coat* | *Current bond coat* |
| *200* | 2 | Solid* | 158 |
| *190* | 2 | | 114 |
| *180* | 3 | | 108 |
| *170* | 5 | | 134 |
| *160* | 8 | | 156 |
| *150* | 14 | | 179 |
| *140* | 26 | | 269 |
| *120* | 117 | | 470 |
| *115* | 198 | | 640 |
| *110* | 259 | | 854 |
| *105* | 482 | | 1223 |
| *100* | 790 | | 1380 |
| *95* | 1183 | | 2097 |
| *90* | 1949 | | 3115 |
| *85* | 3014 | | 5179 |
| *23* | Solid (boiler required to melt in order to apply) | Solid (cold-applied, post-cure) | solid (cold-applied, post-cure) |

| | | | |
|---|---|---|---|
| *It should be noted that it is not possible to measure the viscosity of conventional reactive bond coats because they remain predominantly solid at elevated temperatures - only a small fraction (~10%) of their mass actually melts with the majority (~90%) remaining solid. | | | |

Within the context of the present disclosure, the term "accelerator" refers to a compound or substance added to one of the components that is a precursor to the combined resin mixture that is sprayed. The accelerator is a co-initiator used in the free radical polymerization of the combined resin mixture. Examples of accelerators that are contemplated to be used herein include, but are not limited to, dimethyl aniline, dimethyl para toluidine, methyl hydroxyethyl para toluidine, and di-isopropyl toluidine. In a preferred embodiment, a toluidine is used as the accelerator. Each of the foregoing accelerators can affect gel/cure times as needed. The amount of accelerator utilized can be about 0-5% by weight of the composition in which the accelerator is present, preferably about 1.5-4% by weight of the composition, and even more preferably about 0.7% by weight of the composition. In addition to accelerators, an inhibitor may optionally be added to increase storage stability, shelf life and/or working life of the reaction mixture.

Within the context of the present disclosure, the term "radical initiator" refers to a compound or suspension or substance added to one of the components that is a precursor to the resulting bond coat mixture, where it produces radical species and promotes radical reactions upon mixing with other appropriate components. The concentration can be varied depending on the ambient temperature. Examples of radical initiators that are contemplated to be used herein include, but are not limited to, sodium persulphate, potassium persulphate, ammonium persulphate, peroxide initiators, ferrous sulphate and t-butylperoxide, and mixtures thereof. In a preferred embodiment, a peroxide initator suspension is used as the radical initiator. The amount of radical initiator utilized can be about 0-10% by weight of the composition, preferably about 2-8% by weight, and even more preferably about 3% by weight of the composition.

Methodologically, certain embodiments of the current invention contemplate use of the above-referenced three-component bond coat composition in waterproofing applications, such as on a bridge deck. Components A, B, and C above are packaged individually and transported to the jobsite. On site, Component B is mixed with the Component C to form what will be termed as "activated Component C". Then an appropriate 1: 1 ratio airless spray unit is used to pump Component A and activated Component C via two charging legs towards a mixer unit where Component A and activated Component C are mixed. The mixed material is now fully activated and flows to the spray gun/nozzle, where the material is atomized/sprayed onto the waterproofing membrane (or other substrate) at the desired thickness. The bond coat layer cures via a free-radical polymerization process to provide a solid seamless coating.

On combination of the above-described components, specifically the acrylate-based components, the resulting material is fluid and readily applied onto the substrate (*e.g*., waterproofing membrane) at the appropriate coat-weight. The accelerator, radical initiator, and acrylate mixture form the basis of the reaction that leads to polymerization. The mixture is sprayed (or otherwise applied) onto the substrate before curing. Once fully cured, and upon application of hot asphalt (≥85°C), the bond coat melts, allowing the asphalt mix to interact with and penetrate into the molten coating. This facilitates improved compaction and greater surface contact area at the membrane interface. Upon cooling, the bond coat re-solidifies forming a permanent mechanical bond with the asphalt.

In alternative embodiments of the current invention, the bond coat composition is a two-component system, where Component C can be eliminated (or only optionally included), such that the composition comprises and functions with Component A and Component B. Components A and B are packaged individually and transported to the jobsite. On site, Component B is mixed with Component A directly to form a reactive material. The mixture is then immediately applied onto the waterproofing membrane (or other substrate) using a spray pump (1 leg or a 98:2 system) or a manual device, such as a squeegee or roller. The bond coat layer cures via a free-radical polymerization process to provide a solid seamless coating.

More broadly, using a bridge deck as an exemplary application, a base layer or surface of a bridge deck is provided, a primer is applied onto the bridge deck base layer, one or more layers of waterproofing membranes are applied onto the primer, the bond coat composition of certain embodiments of the current invention is applied onto the waterproofing membrane, and pavement is applied onto the bond coat composition.

Within the context of the present disclosure, the term "shear adhesion" refers to a measure of bond strength between two distinct materials, such as between a waterproofing membrane and asphalt, where the bond coat resists shear forces that cause the asphalt to slide off the substrate/membrane. Shear adhesion is typically recorded as units of megapascals (MPa) and may be determined by methods known in the art. Within the context of the present disclosure, shear adhesion measurements are acquired according to ETAG 033 standards, specifically EN13653:2004, unless otherwise stated. Preferably, the bond coat taught by the present disclosure has a shear adhesion-at ~600-1200 gsm coat weight and ~23°C temperature-between about 0.1 MPa and about 3.5 MPa, more preferably between about 0.3 MPa and about 3.0 MPa, or even more preferably between about 0.5 MPa and about 2.5 MPa. Furthermore, the bond coat taught by the present disclosure has a shear adhesion-at ~600-1200 gsm coat weight and ~50°C temperature-between about 0.01 MPa and about 0.5 MPa, more preferably between about 0.03 MPa and about 0.4 MPa, or even more preferably between about 0.05 MPa and about 0.30 MPa. It is contemplated that shear adhesion may be higher than those listed above, based on composition of the asphalt *(e.g.,* if lower Pen/stiffer bitumen is used in the asphalt mix design).

Within the context of the present disclosure, the term "tensile adhesion" refers to a measure of bond strength between two distinct materials, more specifically between waterproofing membrane and asphalt, where the bond coat adheres the materials upon applying a perpendicular tensile force. Tensile adhesion is typically recorded as units of megapascals (MPa) and may be determined by methods known in the art. Within the context of the present disclosure, tensile adhesion measurements are acquired according to ETAG 033 standards, specifically EN16596, unless otherwise stated. Preferably, the bond coat taught by the present disclosure has a tensile adhesion-at ~600-1200 gsm coat weight and ~23°C temperature-between about 0.1 MPa and about 1.5 MPa, more preferably between about 0.3 MPa and about 1.3 MPa, or even more preferably between about 0.5 MPa and about 1.0 MPa. Furthermore, the bond coat taught by the present disclosure has a tensile adhesion-at ~600-1200 gsm coat weight and ~50°C temperature-between about 0.01 MPa and about 0.35 MPa, more preferably between about 0.04 MPa and about 0.30 MPa, or even more preferably between about 0.07 MPa and about 0.25 MPa. It is contemplated that tensile adhesion may be higher than those listed above, based on composition of the asphalt *(e.g.,* if lower Pen/stiffer bitumen is used in the asphalt mix design).

It should be noted that although the current composition and method are typically most beneficial for adhesion between a waterproofing membrane and various types of asphalt in bridge deck applications, other suitable pavement materials and applications are contemplated herein as well. Referring specifically to asphalt, certain embodiments of the current bond coat can be designed for various types of asphalt, including, but not limited to, asphaltic concrete (AC), hot rolled asphalt (HRA), stone mastic asphalt (SMA), mastic asphalt (MA), porous asphalt, and sand carpet (*e.g.,* asphalt protection layer). It should be noted that even within each category of asphalt, there is no fixed mix design, and a large variation can be observed in the thickness of the asphalt and the asphalt composition.

An exemplary embodiment of the current invention is a low-VOC, 100% solids, reactive, cold-applied liquid coating system. The coating is able to fully cure within two (2) hours, and preferably one (1) hour, within a wide temperature range (about -10°C to +50°C). These properties minimize process application times across a wide application temperature range. Certain embodiments of the current invention are unique in that they are cold-applied reactive materials, yet behave as thermoplastic materials. This feature provides significant utility as there is no longer a need for hot boilers to melt traditional thermoplastic materials (such as bitumen), yet the material maintains thermoplastic properties upon curing. The exemplary embodiment of the current coating is a cold applied liquid, offering many advantages including lower energy costs, carbon emissions, fumes into the environment, and better bond to the substrate/membrane.

Within the context of the present disclosure, the term "cure time" refers to the time required for the fully initiated composition to solidify with a tack free surface. Cure time is recorded in any unit of time, such as seconds, minutes, or hours. Within the context of the present disclosure, unless otherwise stated, cure time is acquired according to ASTM D5895 standards and/or otherwise recorded when the material is dry to physical touch. Preferably, the reactive thermoplastic bond coat composition taught by the present disclosure has a cure time of about 3.0 hours or less, about 2.5 hours or less, about 2.0 hours or less, about 1.5 hours or less, about 1.0 hours or less, or in a range between any two of these values. More preferably, the cure time of the bond coat is about 2.0 hours or less and more specifically about 1.0 hours or less, in a temperature range of about -10 to +50°C. A lowest end of the range is contemplated to be about 1 minute, though this is dependent upon the ambient temperature and the radical initiator concentration within the composition itself.

In further embodiments, the current formulation allows the fully-cured material to heat-activate/melt when asphalt of any type is applied on to it ~85°C or higher. Its thermoplastic properties-when heat-activated-match the performance of conventional hot-melt PMB thermoplastic bond coats. It is noted that these conventional hot-melt PMB thermoplastic bond coats are heat-applied, e.g., boilers are required for melting for application and poor bond is observed to the membranedrawbacks that are alleviated using certain embodiments of the current invention.

In certain embodiments, the current bond coat can be spray-applied at various coat weights (e.g., about 200, 300, 600, 1200, and/or 1400 gsm) depending on the application requirements. Within the context of the present disclosure, the term "coat weight" or "wet film thickness" refers to a measure of the amount of a coating, such as a bond coat, on a substrate, such as a waterproofing membrane. Coat weight is typically recorded as units of grams per square meter (gsm). The coat weight of a material may be determined by methods known in the art. Within the context of the present disclosure, unless otherwise stated, coat weight measurements are acquired using a dip comb (ELCOMETER 112AL) as the material is sprayed and remains liquid on the substrate (*e.g.*, bridge deck) prior to curing. The dip comb is pressed on to the liquid bond coat before it cures, and this provides the applicator with a thickness measurement. The wet film thickness correlates to the gsm by using the density as a conversion factor. Preferably, the bond coat taught by the present disclosure can be applied at a coat weight of about 50 gsm or more, 100 gsm or more, 300 gsm or more, 600 gsm or more, 900 gsm or more, 1200 gsm or more, 1500 gsm or more, 1800 gsm or more, 2100 gsm or more, or in a range between any two of these values. An upper range of this coat weight measurement can be about 2500 gsm, though bond coat thickness will ultimately be dependent on the asphalt mix design and asphalt thickness.

It should be noted that conventional bitumen-based emulsions are applied using heated lines and squeegees, resulting in inconsistent thicknesses due to difficulty in control. Conventional PMB thermoplastic bond coats are also difficult to apply, as they are typically spread by applicators using squeegees; this application method not only results in inconsistent thicknesses, similar to bitumen-based emulsions, but also must be completed very quickly due to a relatively small time window when the bitumen is extremely hot and thus fluid. If the conventional bitumen thermoplastic bond coat is applied too thick, "bleeding" can occur. When hot asphalt is applied to the bond coat, the thicker areas can melt and "bleed" into the actual asphalt paving. This leaves little bond coat at the interface, in turn creating voids. This is a particular problem for applications taking place at high temperatures, when the conventional PMB thermoplastic bond coats are softest. This bleeding can be seen when doing a shear adhesion test, according to the ETAG 033 standard at 60°C. A shear test according to this standard also shows slippage of the asphalt layer when using thick hot melt PMBs at high temperatures-sometimes referred to as "fatigue". Conventional PMB thermoplastic bond coats are prone to peeling off the membrane at high temperatures when trafficked, creating a significant issue for contractors as trafficking is an essential requirement on a busy construction site. In contrast, certain embodiments of the current invention have demonstrated a well-adhered bond to the membrane even at high temperatures, thus eliminating any pick-up or peeling issues. This characteristic was seen when performing the ETAG 033 tensile adhesion test from about 10°C to about 50°C. Significantly lower adhesion values were observed for conventional PMB thermoplastic bond coats compared to the current bond coat.

In terms of adhesion performance, certain embodiments of the current bond coat provide excellent adhesion characteristics with asphalt pavements. Conventional systems, such as bitumen-based emulsions and bitumen thermoplastic materials, provide lower adhesive properties at high temperatures (30-60°C) due to their lower softening points. In contrast, the bond coat described herein does not soften until it is activated and therefore produces improved adhesion results. It should be noted that adhesion values can be lower than expected when the asphalt pavement itself is the weakest point in the composite system.

Another advantage of certain embodiments of the current invention over other reactive systems and bitumen emulsions is that they provide a fluid base for the hot asphalt pavement, allowing for great compaction. This advantage also applies to asphalt pavement mix designs that have high void content, low bitumen content (high aggregate content), and large aggregate size. Furthermore, the increased compaction of asphalt reduces the asphalt pavement thickness requirement, thus reducing cost and labor. Compaction of asphalt is important as it reduces interconnecting voids at the interface and subsequent accumulation of water at the interface (see FIGS. 2-3). It is very well-known in the industry that interconnecting voids and water accumulation should be avoided. See J C Nicholls, et al., "Asphalt Surfacing to Bridge Decks", TRL Report TRL655 (2006). The importance of reducing interconnecting voids is also highlighted in the Highways England Design Manual for Roads and Bridges (Document CD358, Sections 6.4, 8.8, 8.8.1).

Within the context of the present disclosure, the term "average aggregate size" refers to a length measurement approximately across the diameter of individual particles within a group. Within the context of the present disclosure, average aggregate size is acquired according to BS EN 12697 (Part 1, Part 2, Part 35) standards, unless otherwise stated. Preferably, the asphalt that is applied onto the bond coat composition taught by the present disclosure has an average aggregate size of about 1 mm or more, 5 mm or more, about 15 mm or more, about 25 mm or more, about 35 mm or more, about 45 mm or more, about 55 mm or more, or in a range between any two of these values. More preferably, the average aggregate size of the asphalt up to about 40 mm and more specifically up to about 35 mm. An upper end of the range is contemplated to be about 55 mm, though this is dependent upon the asphalt composition.

As indicated previously, additives may be added at certain points during the foregoing formulating process. Within the context of the present disclosure, the term "additive" refers to optional materials that can be added to the bond coat composition. Additives can be added to alter or improve desirable properties in the bond coat composition, or to counteract undesirable properties therein. Examples of additives includes, but are not limited to, fillers, inhibitors, pigments, anti-settlement aids, rheology modifiers, photoinitiators, UV stabilizers, degassers, antistatic agents, accelerants, catalysts, stabilizers, fire retardants, pH adjusters, reinforcing agents, thickening or thinning agents, elastic compounds, chain transfer agents, radiation absorbing or reflecting compounds, and other additives known in the art. The amount of additive utilized can be about 0-50% by weight of the composition in which the additive is present.

### Examples/Experiments

While the invention is described herein using a limited number of embodiments, these specific embodiments are not intended to limit the scope of the invention as otherwise described and claimed herein. Modification and variations from the described embodiments exist. More specifically, the following examples are given as a specific illustration of embodiments of the claimed invention. It should be understood that the invention is not limited to the specific details set forth in the examples. All parts and percentages in the examples, as well as in the remainder of the specification, are by weight of the total bond coat composition, unless otherwise specified.

### Example 1

A thermoplastic bond coat was prepared according to the following formulation:
(1) Component A
   a. PMMA polymer in an amount of about 10-30% by weight of the composition, wherein the PMMA polymer is composed of one or more acrylate monomers having the structure H₂C=C(R¹)COOR², and wherein one or more PMMA polymers may be used in the formulation;
   b. Acrylate monomers in an amount of about 5-45% by weight of the composition, where the acrylate monomers have the structure H₂C=C(R¹)COOR²;
   c. Tackifier in an amount of about 10-50% by weight of the composition, where the Tackifier comprises a terpene phenolic, styrenated terpene, rosin ester, alpha methyl styrene phenolic, polyterpenes, or combination thereof;
   d. Plasticizer in an amount of about 0.1-10% by weight of the composition, examples including adipates, dibutyl sebacate, dibutyl maleate, diisobutyl maleate, orthophthalates, terephthalates, dicarboxylic ester phthalates, tricarboxylic ester phthalates, trimellitates, benzoates and others including 1,2-cyclohexane dicarboxylic acid diisononyl ester (DINCH), organophosphates, glycols, polyethers, and bio-based plasticizers;
   e. Optionally at least one additive in an amount of about 0-50% by weight of the composition, examples including fillers, inhibitors, pigments, waxes, anti-settlement aids, and rheology modifiers, among other suitable additives to achieve certain objectives; and
   f. An accelerator in an amount of about 0-5% by weight of the composition such as dimethyl aniline, dimethyl para toluidine, methyl hydroxyethyl para toluidine or di-isopropyl toluidine.
(2) Component B
   a. Peroxide initiator suspension in an amount of up to about 10% by weight of the composition.
(3) Component C
   a. PMMA polymer in an amount of about 10-30% by weight of the composition, wherein the PMMA polymer is composed of one or more acrylate monomers having the structure H₂C=C(R¹)COOR², and wherein one or more PMMA polymers may be used in the formulation;
   b. acrylate monomers in an amount of about 5-45% by weight of the composition, where the acrylate monomers have the structure H₂C=C(R¹)COOR²;
   c. Tackifier in an amount of about 10-50% by weight of the composition, where the Tackifier comprises a terpene phenolic, styrenated terpene, rosin ester, alpha methyl styrene phenolic, polyterpenes, or combination thereof;
   d. Plasticizer in an amount of about 0.1-10% by weight of the composition, examples including adipates, dibutyl sebacate, dibutyl maleate, diisobutyl maleate, orthophthalates, terephthalates, dicarboxylic ester phthalates, tricarboxylic ester phthalates, trimellitates, benzoates and others including 1,2-cyclohexane dicarboxylic acid diisononyl ester (DINCH), organophosphates, glycols, polyethers, and bio-based plasticizers; and
   e. Optionally at least one additive in an amount of about 0-50% by weight of the composition, examples including fillers, inhibitors, pigments, waxes, anti-settlement aids, and rheology modifiers, among other suitable additives to achieve certain objectives.

Component C was activated with Component B and placed under the pump leg. Component A was placed under the adjacent leg and the combined material was spray-applied onto the waterproofing membrane, which was pre-applied on a primed concrete substrate.

Two samples were prepared by spraying the prepared coating to two depths (coat weights) of about 600 gsm and about 1200 gsm, respectively. The coating had a cure time within one (1) hour at 23°C to provide a solid, smooth, and seamless finish. The resulting composite material was then placed into a mold chamber in which hot asphalt (~160°C) was compacted on top of the bond coat to a thickness of about 50 mm. In this example, an AC10 type asphalt was used; this type of asphalt contains an average aggregate size of about 10 mm and has a tendency to generate a large amount of interconnecting voids. Upon completion of compaction, the asphalt was cooled with water.

The resulting material was cut to the appropriate test piece size and samples were prepared for tensile and shear adhesion testing according to ETAG 033 standards (EN16596 and EN13653:2004, respectively). The test results are shown in Table 2 below for samples tested at 23°C and 50°C:

**Table 2. Shear and tensile adhesion of samples having 600- and 1200-gsm bond coat thicknesses at 23°C and 50°C. As can be seen, the results meet the minimum requirements found in UK national standards, such as CD358 (waterproofing and surfacing of concrete bridge decks).**

| **AC10 asphalt (160°C)** | | |
|---|---|---|
| **Coat weight (gsm)** | **600** | **1200** |
| **Shear @ 23°C (MPa)** | 0.61 | 0.86 |
| **Shear @ 50°C (MPa)** | 0.06 | 0.15 |
| **Tensile @ 23°C (MPa)** | 0.51 | 0.78 |
| **Tensile @ 50°C (MPa)** | 0.08 | 0.15 |

Significant compaction of the asphalt was also observed at the interface between the bond coat and the pavement surfacing-a result of using the current bond coat which melts upon contact with the hot asphalt. The molten layer assists in better compaction at the interface, which results in more surface contact area between asphalt and bond coat, which in turn results in greater adhesion. Furthermore, the current bond coat allows aggregate from the asphalt to penetrate into and embed in it creating a strong mechanical bond. At the same time, the molten bond is displaced upwards to fill any remaining voids at the interface. The improved surface contact area was proven by analyzing how much water penetrated the asphalt and reached the bond coat interface. As reference, a higher amount of water penetrating the asphalt indicates a lack of asphalt compaction due to larger voids at the interface and passageways among the asphalt particles. A lower amount of water penetrating the asphalt to the interface indicates good asphalt compaction at the interface due to small or non-existent voids and passageways among the asphalt particles at the interface. It was found that with this composite system including the exemplary bond coat, less than 1% water migrated to the bond coat interface. This system provides a more robust waterproofing system compared to conventional systems (excluding PMBs) where limited compaction occurs at the interface.

### Example 2

A thermoplastic bond coat was prepared according to the formulation of Example 1. Two samples were prepared by spraying the prepared coating to two depths (coat weights) of about 600 gsm and about 1200 gsm, respectively. The coating had a cure time within one (1) hour at 23°C to provide a solid, smooth and, seamless finish. The resulting composite material was then placed into a mold chamber in which hot asphalt (~160°C) was compacted on top of the bond coat to a thickness of about 50 mm. In this example, an AC32 type asphalt was used; this type of asphalt contains an average aggregate size of about 32 mm and has a tendency to generate a large amount of interconnecting voids. Upon completion of compaction, the asphalt was cooled with water.

The resulting material was cut to the appropriate test piece size and samples were prepared for tensile and shear adhesion testing according to ETAG 033 standards (EN16596 and EN13653:2004). The test results are shown in Table 3 below for samples tested at 23°C and 50°C:

**Table 3. Shear and tensile adhesion of samples having 600- and 1200-gsm bond coat thicknesses at 23°C and 50°C. As can be seen, the results meet the minimum requirements found in UK national standards, such as CD358 (waterproofing and surfacing of concrete bridge decks).**

| **AC32 asphalt (160°C)** | | |
|---|---|---|
| **Coat weight (gsm)** | **600** | **1200** |
| **Shear @ 23°C (MPa)** | 1.14 | 2.43 |
| **Shear @ 50°C (MPa)** | 0.16 | 0.28 |
| **Tensile @ 23°C (MPa)** | 0.77 | 0.83 |
| **Tensile @ 50°C (MPa)** | 0.19 | 0.24 |

## Claims

1. A reactive cold-applied thermoplastic bond coat system, comprising:
a first component comprising:
a polyacrylate polymer in an amount of about 10-30% by weight of the composition, wherein the polyacrylate polymer is a polymethacrylate polymer, a poly(methyl methacrylate) polymer, homopolymers thereof, copolymers thereof, or combinations thereof;
acrylate monomers in an amount of about 5-45% by weight of the composition,
a tackifier in an amount of about 10-50% by weight of the composition, wherein the tackifier is selected from the group consisting of a terpene phenolic compound, a styrenated terpene, a rosin ester compound, an alpha methyl styrene phenolic compound, a polyterpene, and combinations thereof;
a plasticizer in an amount of about 0.1-10% by weight of the composition, wherein the plasticizer is selected from the group consisting of an adipate compound, dibutyl sebacate, dibutyl maleate, diisobutyl maleate, an orthophthalate, a terephthalate, a dicarboxylic ester phthalate, a tricarboxylic ester phthalate, a trimellitate, a benzoate, 1,2-cyclohexane dicarboxylic acid diisononyl ester (DINCH), an organophosphate, a glycol, a polyether, and a bio-based plasticizer; and
an accelerator in an amount of about 0-5% by weight of the composition; where the accelerator is at least one selected from the group consisting of dimethyl aniline, dimethyl para toluidine, methyl hydroxyethyl para toluidine, and di-isopropyl toluidine; and
a second component comprising an initiator suspension, such as a peroxide initiator suspension, in an amount of about 0-10% by weight of the composition,
wherein a mixture of the first component and the second component is sprayable or manually appliable and cures to form a solid bond coat.

2. The bond coat system of claim 1, wherein the first component further comprises at least one additive, preferably in an amount of about 0-50% by weight of the composition; preferably
wherein the at least one additive is selected from fillers, inhibitors, pigments, anti-settlement aids, rheology modifiers, photoinitiators, UV stabilizers, degassers, antistatic agents, accelerants, catalysts, stabilizers, fire retardants, pH adjusters, reinforcing agents, thickening or thinning agents, elastic compounds, chain transfer agents, radiation absorbing compounds, radiation reflecting compounds, and combinations thereof.

3. The bond coat system of claim 1 or claim 2, further comprising a third component comprising:
a polyacrylate polymer in an amount of about 10-30% by weight of the composition, wherein the polyacrylate polymer is a polymethacrylate polymer, a poly(methyl methacrylate) polymer, homopolymers thereof, copolymers thereof, or combinations thereof;
acrylate monomers in an amount of about 5-45% by weight of the composition;
a tackifier in an amount of about 10-50% by weight of the composition, wherein the tackifier is selected from the group consisting of a terpene phenolic compound, a styrenated terpene, a rosin ester, an alpha methyl styrene phenolic compound, a polyterpene, and combinations thereof; and
a plasticizer in an amount of about 0.1-10% by weight of the composition, wherein the plasticizer is selected from the group consisting of an adipate compound, dibutyl sebacate, dibutyl maleate, diisobutyl maleate, an orthophthalate, a terephthalate, a dicarboxylic ester phthalate, a tricarboxylic ester phthalate, a trimellitate, a benzoate, 1,2-cyclohexane dicarboxylic acid diisononyl ester (DINCH), an organophosphate, a glycol, a polyether, and a bio-based plasticizer,
wherein
a mixture of the second component and the third component forms an activated third component, and
a mixture of the first component and the activated third component is sprayable and cures to form the bond coating;
preferably wherein the third component further comprises at least one additive, more preferably in an amount of about 0-50% by weight of the composition, wherein the at least one additive is selected from fillers, inhibitors, pigments, anti-settlement aids, rheology modifiers, photoinitiators, UV stabilizers, degassers, antistatic agents, accelerants, catalysts, stabilizers, fire retardants, pH adjusters, reinforcing agents, thickening or thinning agents, elastic compounds, chain transfer agents, radiation absorbing compounds, radiation reflecting compounds, and combinations thereof.

4. The bond coat system of any one of claims 1 to 3, wherein the bond coat, after curing and upon exposure to a temperature of about 200°C or below, becomes a molten liquid having a viscosity effective to permit compaction of a pavement material applied on the bond coat and increase the surface contact area, such that a water penetration at the interface of the bond coat and the pavement material is about 50% or less, preferably about 1% or less;
preferably wherein the temperature is about 100°C or less and the viscosity is about 6,000 cP or less.

5. The bond coat system of any one of claims 1 to 4, wherein a shear adhesion between a substrate on which the bond coat is applied and a pavement material applied on the bond coat is between about 0.3 MPa and about 3.0 MPa at a temperature of about 23°C and a coat weight of about 600-1200 gsm.

6. The bond coat system of any one of claims 1 to 5, wherein a tensile adhesion between a substrate on which the bond coat is applied and a pavement material applied on the bond coat is between about 0.3 MPa and about 1.3 MPa at a temperature of about 23°C and a coat weight of about 600-1200 gsm.

7. A method of binding a pavement material to a substrate, comprising:
mixing together a first component and a second component;
wherein the first component comprises:
a polyacrylate polymer in an amount of about 10-30% by weight of the composition, wherein the polyacrylate polymer is a polymethacrylate polymer, a poly(methyl methacrylate) polymer, homopolymers thereof, copolymers thereof, or combinations thereof;
acrylate monomers in an amount of about 5-45% by weight of the composition,
a tackifier in an amount of about 10-50% by weight of the composition, wherein the tackifier is selected from the group consisting of a terpene phenolic compound, a styrenated terpene, a rosin ester, an alpha methyl styrene phenolic compound, a polyterpene, and combinations thereof;
a plasticizer in an amount of about 0.1-10% by weight of the composition, wherein the plasticizer is selected from the group consisting of an adipate compound, dibutyl sebacate, dibutyl maleate, diisobutyl maleate, an orthophthalate, a terephthalate, a dicarboxylic ester phthalate, a tricarboxylic ester phthalate, a trimellitate, a benzoate, 1,2-cyclohexane dicarboxylic acid diisononyl ester (DINCH), an organophosphate, a glycol, a polyether, and a bio-based plasticizer; and
an accelerator in an amount of about 0-5% by weight of the composition; wherein the accelerator is at least one selected from the group consisting of dimethyl aniline, dimethyl para toluidine, methyl hydroxyethyl para toluidine, and di-isopropyl toluidine,
wherein the second component comprises an initiator suspension, such as a peroxide initiator suspension, in an amount of about 0-10% by weight of the composition;
applying the mixture onto the substrate without the use of heating elements;
allowing the mixture to cure to form a cured bond coat;
applying the pavement material onto the cured bond coat to form a composite of the cured bond coat and the pavement material, where the composite binds the pavement material to the substrate and provides for a waterproof bond between the pavement material and the substrate.

8. The method of claim 7, wherein the pavement material comprises asphalt; preferably
a) wherein the asphalt is selected from the group consisting of asphaltic concrete, hot rolled asphalt, stone mastic asphalt, mastic asphalt, porous asphalt, sand carpet, and asphalt protection layer; and/or
b) wherein the asphalt has an average aggregate size up to about 55 mm.

9. The method of claim 7 or claim 8, wherein the substrate comprises a waterproofing membrane.

10. The method of any one of claims 7 to 9, wherein the step of applying the mixture onto the substrate is performed by spraying the mixture onto the substrate.

11. The method of any one of claims 7 to 10, wherein the mixture is applied onto the substrate at a coat weight of about 100 gsm to about 1400 gsm.

12. The method of any one of claims 7 to 11, further comprising mixing a third component together with the second component to form an activated third component, which is subsequently mixed with the first component and applied onto the substrate.

13. The method of any one of claims 7 to 12, wherein upon application of the pavement material onto the cured bond coat, the pavement material is capable of compacting on the bond coat, such that a water penetration at the interface of the bond coat and the pavement material is about 50% or less, preferably about 1% or less.

14. The method of any one of claims 7 to 13, wherein the bond coat, after curing and upon exposure to a temperature of about 200°C or below, becomes a molten liquid having a viscosity effective to permit compaction of a pavement material applied on the bond coat and increase the surface contact area, such that a water penetration at the interface of the bond coat and the pavement material is about 50% or less, preferably about 1% or less;
preferably wherein the temperature is about 100°C or less and the viscosity is about 6,000 cP or less.

15. The method of any one of claims 7 to 14, wherein:
a) a shear adhesion between the substrate and a pavement material applied on the bond coat is between about 0.3 MPa and about 3.0 MPa at a temperature of about 23°C and a coat weight of about 600-1200 gsm; and/or
b) wherein a tensile adhesion between the substrate and a pavement material applied on the bond coat is between about 0.3 MPa and about 1.3 MPa at a temperature of about 23°C and a coat weight of about 600-1200 gsm.

## Patentansprüche

1. Reaktives, kalt aufzutragendes thermoplastisches Haftschichtsystem, das umfasst:
eine erste Komponente, die umfasst:
ein Polyacrylatpolymer in einer Menge von etwa 10-30 Gew.-% der Zusammensetzung, wobei das Polyacrylatpolymer ein Polymethacrylatpolymer, ein Poly(methylmethacrylat)polymer, Homopolymere davon, Copolymere davon oder Kombinationen davon ist;
Acrylatmonomere in einer Menge von etwa 5-45 Gew.-% der Zusammensetzung,
einen Klebrigmacher in einer Menge von etwa 10-50 Gew.-% der Zusammensetzung, wobei der Klebrigmacher ausgewählt ist aus der Gruppe bestehend aus einer Terpenphenolverbindung, einem styrolisierten Terpen, einer Kolophoniumesterverbindung, einer alpha-Methylstyrolphenolverbindung, einem Polyterpen und Kombinationen davon;
einen Weichmacher in einer Menge von etwa 0,1-10 Gew.-% der Zusammensetzung, wobei der Weichmacher ausgewählt ist aus der Gruppe bestehend aus einer Adipatverbindung, Dibutylsebacat, Dibutylmaleat, Diisobutylmaleat, einem Orthophthalat, einem Terephthalat, einem Dicarbonsäureesterphthalat, einem Tricarbonsäureesterphthalat, einem Trimellitat, einem Benzoat, 1,2-Cyclohexandicarbonsäurediisononylester (DINCH), einem Organophosphat, einem Glykol, einem Polyether und einem biobasierten Weichmacher; und
einen Beschleuniger in einer Menge von etwa 0-5 Gew.-% der Zusammensetzung, wobei der Beschleuniger mindestens einer ist, der aus der Gruppe ausgewählt ist, die aus Dimethylanilin, Dimethylparatoluidin, Methylhydroxyethylparatoluidin und Diisopropyltoluidin besteht, und
eine zweite Komponente, die eine Initiatorsuspension, wie eine Peroxid-Initiatorsuspension, in einer Menge von etwa 0-10 Gew.-% der Zusammensetzung umfasst,
wobei ein Gemisch aus der ersten Komponente und der zweiten Komponente sprühbar oder manuell auftragbar ist und unter Bildung einer festen Haftschicht aushärtet.

2. Haftschichtsystem nach Anspruch 1, wobei die erste Komponente ferner mindestens einen Zusatzstoff umfasst, vorzugsweise in einer Menge von etwa 0 bis 50 Gew.-% der Zusammensetzung; vorzugsweise
wobei der mindestens eine Zusatzstoff aus Folgendem ausgewählt ist: Füllstoffen, Inhibitoren, Pigmenten, Antiabsetzhilfen, Rheologiemodifikatoren, Photoinitiatoren, UV-Stabilisatoren, Entgasungsmitteln, Antistatika, Beschleunigern, Katalysatoren, Stabilisatoren, Flammschutzmitteln, pH-Einstellern, Verstärkungsmitteln, Verdickungs- oder Verdünnungsmitteln, elastischen Verbindungen, Kettenübertragungsmitteln, strahlungsabsorbierenden Verbindungen, strahlungsreflektierenden Verbindungen und Kombinationen davon.

3. Haftschichtsystem nach Anspruch 1 oder Anspruch 2, das ferner eine dritte Komponente umfasst, die Folgendes umfasst:
ein Polyacrylatpolymer in einer Menge von etwa 10-30 Gew.-% der Zusammensetzung, wobei das Polyacrylatpolymer ein Polymethacrylatpolymer, ein Poly(methylmethacrylat)polymer, Homopolymere davon, Copolymere davon oder Kombinationen davon ist;
Acrylatmonomere in einer Menge von etwa 5-45 Gew.-% der Zusammensetzung,
einen Klebrigmacher in einer Menge von etwa 10-50 Gew.-% der Zusammensetzung, wobei der Klebrigmacher ausgewählt ist aus der Gruppe bestehend aus einer Terpenphenolverbindung, einem styrolisierten Terpen, einem Kolophoniumester, einer alpha-Methylstyrolphenolverbindung, einem Polyterpen und Kombinationen davon; und
einen Weichmacher in einer Menge von etwa 0,1-10 Gew.-% der Zusammensetzung, wobei der Weichmacher ausgewählt ist aus der Gruppe bestehend aus einer Adipatverbindung, Dibutylsebacat, Dibutylmaleat, Diisobutylmaleat, einem Orthophthalat, einem Terephthalat, einem Dicarbonsäureesterphthalat, einem Tricarbonsäureesterphthalat, einem Trimellitat, einem Benzoat, 1,2-Cyclohexandicarbonsäurediisononylester (DINCH), einem Organophosphat, einem Glykol, einem Polyether und einem biobasierten Weichmacher,
wobei
ein Gemisch aus der zweiten Komponente und der dritten Komponente eine aktivierte dritte Komponente bildet, und
ein Gemisch aus der ersten Komponente und der aktivierten dritten Komponente sprühbar ist und aushärtet, um die Haftschicht zu bilden;
vorzugsweise wobei die dritte Komponente ferner mindestens einen Zusatzstoff umfasst, noch bevorzugter in einer Menge von etwa 0 bis 50 Gew.-% der Zusammensetzung, wobei der mindestens eine Zusatzstoff aus Folgendem ausgewählt ist: Füllstoffen, Inhibitoren, Pigmenten, Antiabsetzhilfen, Rheologiemodifikatoren, Photoinitiatoren, UV-Stabilisatoren, Entgasungsmitteln, Antistatika, Beschleunigern, Katalysatoren, Stabilisatoren, Flammschutzmitteln, pH-Einstellern, Verstärkungsmitteln, Verdickungs- oder Verdünnungsmitteln, elastischen Verbindungen, Kettenübertragungsmitteln, strahlungsabsorbierenden Verbindungen, strahlungsreflektierenden Verbindungen und Kombinationen davon.

4. Haftschichtsystem nach einem der Ansprüche 1 bis 3, wobei die Haftschicht nach dem Aushärten und bei einer Temperatur von etwa 200°C oder darunter zu einer geschmolzenen Flüssigkeit mit einer Viskosität wird, die eine Verdichtung eines auf die Haftschicht aufgebrachten Belagsmaterials ermöglicht und die Oberflächenkontaktfläche vergrößert, so dass die Wasserdurchdringung an der Grenzfläche zwischen der Haftschicht und dem Belagsmaterial etwa 50 % oder weniger, vorzugsweise etwa 1 % oder weniger beträgt;
wobei die Temperatur vorzugsweise etwa 100°C oder weniger beträgt und die Viskosität etwa 6.000 cP oder weniger beträgt.

5. Haftschichtsystem nach einem der Ansprüche 1 bis 4, wobei die Scherhaftung zwischen einem Substrat, auf das die Haftschicht aufgebracht wird, und einem auf die Haftschicht aufgebrachten Belagsmaterial zwischen etwa 0,3 MPa und etwa 3,0 MPa bei einer Temperatur von etwa 23°C und einem Schichtgewicht von etwa 600-1200 g/m2 liegt.

6. Haftschichtsystem nach einem der Ansprüche 1 bis 5, wobei die Zughaftung zwischen einem Substrat, auf das die Haftschicht aufgebracht wird, und einem auf die Haftschicht aufgebrachten Belagsmaterial zwischen etwa 0,3 MPa und etwa 1,3 MPa bei einer Temperatur von etwa 23°C und einem Schichtgewicht von etwa 600-1200 g/m² liegt.

7. Verfahren zum Binden eines Belagsmaterials an ein Substrat, das umfasst:
Zusammenmischen einer ersten Komponente und einer zweiten Komponente;
wobei die erste Komponente umfasst:
ein Polyacrylatpolymer in einer Menge von etwa 10-30 Gew.-% der Zusammensetzung, wobei das Polyacrylatpolymer ein Polymethacrylatpolymer, ein Poly(methylmethacrylat)polymer, Homopolymere davon, Copolymere davon oder Kombinationen davon ist;
Acrylatmonomere in einer Menge von etwa 5-45 Gew.-% der Zusammensetzung,
einen Klebrigmacher in einer Menge von etwa 10-50 Gew.-% der Zusammensetzung, wobei der Klebrigmacher ausgewählt ist aus der Gruppe bestehend aus einer Terpenphenolverbindung, einem styrolisierten Terpen, einem Kolophoniumester, einer alpha-Methylstyrolphenolverbindung, einem Polyterpen und Kombinationen davon;
einen Weichmacher in einer Menge von etwa 0,1-10 Gew.-% der Zusammensetzung, wobei der Weichmacher ausgewählt ist aus der Gruppe bestehend aus einer Adipatverbindung, Dibutylsebacat, Dibutylmaleat, Diisobutylmaleat, einem Orthophthalat, einem Terephthalat, einem Dicarbonsäureesterphthalat, einem Tricarbonsäureesterphthalat, einem Trimellitat, einem Benzoat, 1,2-Cyclohexandicarbonsäurediisononylester (DINCH), einem Organophosphat, einem Glykol, einem Polyether und einem biobasierten Weichmacher; und
einen Beschleuniger in einer Menge von etwa 0-5 Gew.-% der Zusammensetzung; wobei der Beschleuniger mindestens einer ist, der aus der Gruppe ausgewählt ist, die aus Dimethylanilin, Dimethylparatoluidin, Methylhydroxyethylparatoluidin und Diisopropyltoluidin besteht;
wobei die zweite Komponente eine Initiatorsuspension, wie eine Peroxid-Initiatorsuspension, in einer Menge von etwa 0-10 Gew.-% der Zusammensetzung umfasst,
Auftragen des Gemischs auf das Substrat ohne Verwendung von Heizelementen;
Aushärtenlassen des Gemischs zur Bildung einer ausgehärteten Haftschicht;
Aufbringen des Belagsmaterials auf die ausgehärtete Haftschicht, um einen Verbund aus der ausgehärteten Haftschicht und dem Belagsmaterial zu bilden, wobei der Verbund das Belagsmaterial an das Substrat bindet und für eine wasserdichte Haftung zwischen dem Belagsmaterial und dem Substrat sorgt.

8. Verfahren nach Anspruch 7, wobei das Belagsmaterial Asphalt umfasst; vorzugsweise
a) wobei der Asphalt ausgewählt ist aus der Gruppe bestehend aus Asphaltbeton, Heißwalzasphalt, Splittmastixasphalt, Gussasphalt, offenporigem Asphalt, Sandteppich und Asphaltschutzschicht; und/oder
b) wobei der Asphalt eine durchschnittliche Korngröße von bis zu etwa 55 mm aufweist.

9. Verfahren nach Anspruch 7 oder Anspruch 8, wobei der Untergrund eine Abdichtungsmembran umfasst.

10. Verfahren nach einem der Ansprüche 7 bis 9, wobei der Schritt des Auftragens des Gemisches auf den Untergrund durch Aufsprühen des Gemisches auf den Untergrund durchgeführt wird.

11. Verfahren nach einem der Ansprüche 7 bis 10, wobei das Gemisch mit einem Schichtgewicht von etwa 100 g/m² bis etwa 1400 g/m² auf das Substrat aufgebracht wird.

12. Verfahren nach einem der Ansprüche 7 bis 11, das ferner das Mischen einer dritten Komponente mit der zweiten Komponente zur Bildung einer aktivierten dritten Komponente umfasst, die anschließend mit der ersten Komponente gemischt und auf das Substrat aufgebracht wird.

13. Verfahren nach einem der Ansprüche 7 bis 12, wobei nach dem Aufbringen des Belagsmaterials auf die ausgehärtete Haftschicht das Belagsmaterial in der Lage ist, sich auf der Haftschicht zu verdichten, so dass die Wasserdurchdringung an der Grenzfläche zwischen der Haftschicht und dem Belagsmaterial etwa 50 % oder weniger, vorzugsweise etwa 1 % oder weniger beträgt.

14. Verfahren nach einem der Ansprüche 7 bis 13, wobei die Haftschicht nach dem Aushärten und nach Aussetzen einer Temperatur von etwa 200°C oder darunter zu einer geschmolzenen Flüssigkeit mit einer Viskosität wird, die eine Verdichtung eines auf die Haftschicht aufgebrachten Belagsmaterials ermöglicht und die Oberflächenkontaktfläche vergrößert, so dass die Wasserdurchdringung an der Grenzfläche zwischen der Haftschicht und dem Belagsmaterial etwa 50 % oder weniger, vorzugsweise etwa 1 % oder weniger beträgt;
wobei die Temperatur vorzugsweise etwa 100°C oder weniger beträgt und die Viskosität etwa 6.000 cP oder weniger beträgt.

15. Verfahren nach einem der Ansprüche 7 bis 14, wobei:
a) eine Scherhaftung zwischen dem Substrat und einem auf die Haftschicht aufgebrachten Belagsmaterial zwischen etwa 0,3 MPa und etwa 3,0 MPa bei einer Temperatur von etwa 23°C und einem Schichtgewicht von etwa 600-1200 g/m2 liegt; und/oder
b) wobei eine Zughaftung zwischen dem Substrat und einem auf die Haftschicht aufgebrachten Belagsmaterial zwischen etwa 0,3 MPa und etwa 1,3 MPa bei einer Temperatur von etwa 23°C und einem Schichtgewicht von etwa 600-1200 g/m2 liegt.

## Revendications

1. Système de revêtement de liaison thermoplastique réactif appliqué à froid, comprenant :
un premier composant comprenant :
un polymère polyacrylate en une quantité d'environ 10 à 30 % en poids de la composition, ledit polymère polyacrylate étant un polymère polyméthacrylate, un polymère poly(méthacrylate de méthyle), des homopolymères de ceux-ci, des copolymères de ceux-ci ou des combinaisons de ceux-ci,
des monomères d'acrylate en une quantité d'environ 5 à 45 % en poids de la composition,
un agent poisseux en une quantité d'environ 10 à 50 % en poids de la composition, ledit agent poisseux étant choisi dans le groupe constitué par un composé phénolique terpénique, un terpène styréné, un composé ester de colophane, un composé phénolique alpha-méthylstyrène, un polyterpène et des combinaisons de ceux-ci,
un plastifiant en une quantité d'environ 0,1 à 10 % en poids de la composition, ledit plastifiant étant choisi dans le groupe constitué par un composé adipate, le sébacate de dibutyle, le maléate de dibutyle, le maléate de diisobutyle, un orthophtalate, un téréphtalate, un phtalate d'ester dicarboxylique, un phtalate d'ester tricarboxylique, un trimellitate, un benzoate, l'ester diisononyle de l'acide 1,2-cyclohexane dicarboxylique (DINCH), un organophosphate, un glycol, un polyéther et un plastifiant biosourcé, et
un accélérateur en une quantité d'environ 0 à 5 % en poids de la composition, ledit accélérateur étant au moins un accélérateur choisi dans le groupe constitué par la diméthylaniline, la diméthylparatoluidine, la méthylhydroxyéthylparatoluidine et la diisopropyltoluidine ; et
un deuxième composant comprenant une suspension d'amorceur, telle qu'une suspension d'amorceur peroxyde, en une quantité d'environ 0 à 10 % en poids de la composition ;
un mélange desdits premier composant et deuxième composant étant pulvérisable ou applicable manuellement et durcissant pour former un revêtement de liaison solide.

2. Système de revêtement de liaison selon la revendication 1, dans lequel le premier composant comprend en outre au moins un additif, de préférence en une quantité d'environ 0 à 50 % en poids de la composition ;
ledit au moins un additif étant de préférence choisi parmi les charges, les inhibiteurs, les pigments, les agents anti-sédimentation, les modificateurs rhéologiques, les photoamorceurs, les inhibiteurs UV, les dégazeurs, les agents antistatiques, les accélérateurs, les catalyseurs, les stabilisants, les retardateurs de flamme, les ajusteurs de pH, les agents de renforcement, les agents épaississants ou fluidifiants, les composés élastiques, les agents de transfert de chaîne, les composés absorbant le rayonnement, les composés réfléchissant le rayonnement et des combinaisons de ceux-ci.

3. Système de revêtement de liaison selon la revendication 1 ou la revendication 2, comprenant en outre un troisième composant comprenant :
un polymère polyacrylate en une quantité d'environ 10 à 30 % en poids de la composition, ledit polymère polyacrylate étant un polymère polyméthacrylate, un polymère poly(méthacrylate de méthyle), des homopolymères de ceux-ci, des copolymères de ceux-ci ou des combinaisons de ceux-ci,
des monomères d'acrylate en une quantité d'environ 5 à 45 % en poids de la composition,
un agent poisseux en une quantité d'environ 10 à 50 % en poids de la composition, ledit agent poisseux étant choisi dans le groupe constitué par un composé phénolique terpénique, un terpène styréné, un ester de colophane, un composé phénolique alpha-méthylstyrène, un polyterpène et des combinaisons de ceux-ci, et
un plastifiant en une quantité d'environ 0,1 à 10 % en poids de la composition, ledit plastifiant étant choisi dans le groupe constitué par un composé adipate, le sébacate de dibutyle, le maléate de dibutyle, le maléate de diisobutyle, un orthophtalate, un téréphtalate, un phtalate d'ester dicarboxylique, un phtalate d'ester tricarboxylique, un trimellitate, un benzoate, l'ester diisononyle de l'acide 1,2-cyclohexane dicarboxylique (DINCH), un organophosphate, un glycol, un polyéther et un plastifiant biosourcé,
étant entendu que
un mélange desdits deuxième composant et troisième composant forme un troisième composant activé, et
un mélange desdits premier composant et troisième composant activé est pulvérisable et durcit pour former le revêtement de liaison ;
ledit troisième composant comprenant de préférence en outre au moins un additif, plus préférablement en une quantité d'environ 0 à 50 % en poids de la composition, ledit au moins un additif étant choisi parmi les charges, les inhibiteurs, les pigments, les agents anti-sédimentation, les modificateurs rhéologiques, les photoamorceurs, les inhibiteurs UV, les dégazeurs, les agents antistatiques, les accélérateurs, les catalyseurs, les stabilisants, les retardateurs de flamme, les ajusteurs de pH, les agents de renforcement, les agents épaississants ou fluidifiants, les composés élastiques, les agents de transfert de chaîne, les composés absorbant le rayonnement, les composés réfléchissant le rayonnement et des combinaisons de ceux-ci.

4. Système de revêtement de liaison selon l'une quelconque des revendications 1 à 3, dans lequel le revêtement de liaison, après durcissement et sous l'effet d'une exposition à une température d'environ 200 °C ou moins, se transforme en un liquide fondu ayant une viscosité efficace pour permettre le compactage d'un matériau de chaussée appliqué sur le revêtement de liaison et augmenter la surface de contact, de telle façon que toute pénétration d'eau à l'interface entre le revêtement de liaison et le matériau de chaussée est d'environ 50 % ou moins, de préférence d'environ 1 % ou moins ;
ladite température étant de préférence d'environ 100°C ou moins et ladite viscosité d'environ 6000 cP ou moins.

5. Système de revêtement de liaison selon l'une quelconque des revendications 1 à 4, dans lequel une adhérence par cisaillement entre un substrat sur lequel le revêtement de liaison est appliqué et un matériau de chaussée appliqué sur le revêtement de liaison est comprise entre environ 0,3 MPa et environ 3,0 MPa à une température d'environ 23 °C et avec une masse surfacique de revêtement d'environ 600 à 1200 g/m².

6. Système de revêtement de liaison selon l'une quelconque des revendications 1 à 5, dans lequel une adhérence par traction entre un substrat sur lequel le revêtement de liaison est appliqué et un matériau de chaussée appliqué sur le revêtement de liaison est comprise entre environ 0,3 MPa et environ 1,3 MPa à une température d'environ 23 °C et avec une masse surfacique de revêtement d'environ 600 à 1200 g/m².

7. Procédé de liaison d'un matériau de chaussée à un substrat, comprenant les étapes consistant à :
mélanger ensemble un premier composant et un deuxième composant,
ledit premier composant comprenant :
un polymère polyacrylate en une quantité d'environ 10 à 30 % en poids de la composition, ledit polymère polyacrylate étant un polymère polyméthacrylate, un polymère poly(méthacrylate de méthyle), des homopolymères de ceux-ci, des copolymères de ceux-ci ou des combinaisons de ceux-ci,
des monomères d'acrylate en une quantité d'environ 5 à 45 % en poids de la composition,
un agent poisseux en une quantité d'environ 10 à 50 % en poids de la composition, ledit agent poisseux étant choisi dans le groupe constitué par un composé phénolique terpénique, un terpène styréné, un ester de colophane, un composé phénolique alpha-méthylstyrène, un polyterpène et des combinaisons de ceux-ci,
un plastifiant en une quantité d'environ 0,1 à 10 % en poids de la composition, ledit plastifiant étant choisi dans le groupe constitué par un composé adipate, le sébacate de dibutyle, le maléate de dibutyle, le maléate de diisobutyle, un orthophtalate, un téréphtalate, un phtalate d'ester dicarboxylique, un phtalate d'ester tricarboxylique, un trimellitate, un benzoate, l'ester diisononyle de l'acide 1,2-cyclohexane dicarboxylique (DINCH), un organophosphate, un glycol, un polyéther et un plastifiant biosourcé, et
un accélérateur en une quantité d'environ 0 à 5 % en poids de la composition, ledit accélérateur étant au moins un accélérateur choisi dans le groupe constitué par la diméthylaniline, la diméthylparatoluidine, la méthylhydroxyéthylparatoluidine et la diisopropyltoluidine,
ledit deuxième composant comprenant une suspension d'amorceur, telle qu'une suspension d'amorceur peroxyde, en une quantité d'environ 0 à 10 % en poids de la composition ;
appliquer le mélange sur le substrat sans utiliser d'éléments chauffants ;
laisser le mélange durcir pour former un revêtement de liaison durcie ;
appliquer le matériau de chaussée sur le revêtement de liaison durci pour former un composite de revêtement de liaison durci et de matériau de chaussée, ledit composite liant le matériau de chaussée au substrat et assurant une liaison étanche à l'eau entre le matériau de chaussée et le substrat.

8. Procédé selon la revendication 7, dans lequel le matériau de chaussée comprend de l'asphalte ; et dans lequel de préférence
a) l'asphalte est choisi dans le groupe constitué par le béton asphaltique, l'asphalte compacté à chaud, l'asphalte coulé gravillonné, l'asphalte coulé, l'asphalte poreux, le mélange dit « sand carpet » et le revêtement de protection d'asphalte , et/ou
b) l'asphalte a une taille d'agrégat moyenne allant jusqu'à environ 55 mm.

9. Procédé selon la revendication 7 ou la revendication 8, dans lequel le substrat comprend une membrane d'étanchéité à l'eau.

10. Procédé selon l'une quelconque des revendications 7 à 9, dans lequel l'étape d'application du mélange sur le substrat est réalisée par pulvérisation du mélange sur le substrat.

11. Procédé selon l'une quelconque des revendications 7 à 10, dans lequel le mélange est appliqué sur le substrat selon une masse surfacique de revêtement d'environ 100 g/m² à environ 1400 g/m².

12. Procédé selon l'une quelconque des revendications 7 à 11, comprenant en outre le mélange d'un troisième composant avec le deuxième composant pour former un troisième composant activé, lequel est ensuite mélangé avec le premier composant et appliqué sur le substrat.

13. Procédé selon l'une quelconque des revendications 7 à 12, dans lequel, lors de l'application du matériau de chaussée sur le revêtement de liaison durci, le matériau de chaussée est apte au compactage sur le revêtement de liaison, de telle façon que toute pénétration d'eau à l'interface entre le revêtement de liaison et le matériau de chaussée est d'environ 50 % ou moins, de préférence d'environ 1 % ou moins.

14. Procédé selon l'une quelconque des revendications 7 à 13, dans lequel le revêtement de liaison, après durcissement et sous l'effet d'une exposition à une température d'environ 200 °C ou moins, se transforme en un liquide fondu ayant une viscosité efficace pour permettre le compactage d'un matériau de chaussée appliqué sur le revêtement de liaison et augmenter la surface de contact, de telle façon que toute pénétration d'eau à l'interface entre le revêtement de liaison et le matériau de chaussée est d'environ 50 % ou moins, de préférence d'environ 1 % ou moins ;
ladite température étant de préférence d'environ 100 °C ou moins et ladite viscosité d'environ 6000 cP ou moins.

15. Procédé selon l'une quelconque des revendications 7 à 14, dans lequel :
a) une adhérence par cisaillement entre le substrat et un matériau de chaussée appliqué sur le revêtement de liaison est comprise entre environ 0,3 MPa et environ 3,0 MPa à une température d'environ 23 °C et avec une masse surfacique de revêtement d'environ 600 à 1200 g/m², et/ou
b) une adhérence par traction entre le substrat et un matériau de chaussée appliqué sur le revêtement de liaison est comprise entre environ 0,3 MPa et environ 1,3 MPa à une température d'environ 23°C et une masse surfacique de revêtement d'environ 600 à 1200 g/m².
